# EUROPÄISCHE PATENTANMELDUNG

(11) **EP 4 575 327 A2**
(43) Veröffentlichungstag der Anmeldung: **25.06.2025**
(21) Anmeldenummer: 25163332.7
(22) Anmeldetag: 15.01.2016
(51) Int. Cl.: F24D 3/14

(54) **BAUTEIL**

(30) Priorität: 17.01.2015 DE 102015000287
(62) Teilanmeldung aus: 16151622.4
(71) Anmelder: P + R GmbH, 87700 Memmingen (DE)
(72) Erfinder: Bühler, Armin, 87733 Markt Rettenbach (DE)
(74) Vertreter: Pfister, Stefan Helmut Ulrich

(57) **Zusammenfassung**

Die Erfindung betrifft ein einen Raum eines Gebäudes begrenzendes Bauteil. Das Bauteil weist einen Energiespeicher zur Speicherung von thermischer Energie und ein Flächentemperierelement, das dem zu temperierenden Raum zugewandt ist, auf. Zwischen dem Energiespeicher und dem Flächentemperierelement ist eine thermische Isolierung vorgesehen. Das Bauteil ist als Filigranbauteil bzw. Filigrandeckenbauteil, ausgebildet.

## Beschreibung

Die Erfindung betrifft ein Bauteil, das Teil eines System für die Temperierung eines Raumes eines Gebäudes ist. Die Erfindung betrifft auch ein System für die Temperierung eines Raumes eines Gebäudes und zur Speicherung von thermischer Energie.

Im Stand der Technik sind zum Beispiel Klimadecken oder thermisch aktivierbare Bauteile bekannt, die mit einem hydraulisch betriebenen Pufferspeicher als Energiespeicher in Verbindung stehen.

Klimadecken bzw. thermisch aktivierte Bauteile, insbesondere thermisch aktivierte Decken, sind heute in unterschiedlichsten Ausführungsformen bekannt.

Diesen Systemen, häufig unter dem Terminus "Thermische Bauteilaktivierung" oder "Betonkernaktivierung" usw. bekannt, liegt die Idee zugrunde, eine möglichst große Masse im Gebäude relativ gleichmäßig und konstant auf eine einmal definierte und vorgewählte Temperatur zu bringen und zu halten. Über die temperierte Gebäudemasse, insbesondere der Decken, soll der Gebäudeinhalt, der zu temperierende Raum, auf einer vorgegebenen Temperatur, bei mehr oder weniger großer Abweichung, gehalten werden. Dabei liegt der energetische Vorteil in der Abfangung thermischer Spitzenlasten im Heiz-/ wie auch im Kühlfall durch eben die aktivierte Gebäudemasse. Hieraus resultiert, da diese Spitzenlasten abgefangen werden, daß die Anlagen zur Erzeugung der thermischen Energie kleiner ausgebildet und gleichmäßiger betrieben werden können.

Diesem Vorteil steht der Nachteil der schieren Unmöglichkeit zur kurzfristigen Steuerung und Anpassung, ebenfalls begründet in der Aktivierung der Gebäudemasse, gegenüber. Insbesondere bei stark unterschiedlichen Temperaturverläufen, hervorgerufen durch z. B. große Glasflächen und/oder rasch wechselnde Außentemperaturen bzw. solaren Einstrahlungen oder stark wechselnden internen Lasten/Gewinnen macht sich dieser Nachteil bemerkbar. So dass häufig zur Unterstützung zusätzliche freie/integrierte Heizflächen oder/und mit Heiz-/ Kühlregistern ausgestattete Lüftungsanlagen eingesetzt werden müssen. Neben den zusätzlichen Kosten und Bauzeiten wird durch den Betrieb dieser ergänzenden Anlagen ein (Groß-)Teil der energetischen Vorteile, welche in der Masseaktivierung begründet sind, aufgezehrt. Daneben bestehen häufig Einschränkungen in der Behaglichkeit welche durch die mangelnde Regelbarkeit hervorgerufen werden.

Es ist Aufgabe der vorliegenden Erfindung, diesen Stand der Technik zu verbessern.

Zur Lösung dieser Aufgabe schlägt die Erfindung einen Bauteil nach Anspruch 1 und ein System nach Anspruch 8 vor.

Der Pfiff der Erfindung liegt zum einen in einer gleichermaßen werkseitig vorgefertigten, wie auch in Gänze oder mittels Halbfertigteilen bauseits erstellbaren "Hybrid-Klimadecke" bzw. einem "Multifunktionalem und/oder auch thermoaktivem Bauteils," sowie dessen Herstellung und thermische Steuerung, zu Grunde. Die Erfindung betrifft neben dem mindestens zwei Temperaturzonen umfassenden Speicher-/Entladekonzept mit mindestens einer flinken Temperaturzone (realisiert durch das Flächentemperierelement) und einer trägen Temperaturzone (realisiert durch den aus festem Material gebildeten Energiespeicher), auch Lösungen für Ausführungen in massiver als auch in Trockenbauweise. Somit ist die Erfindung für Massivbau, Neubau, Leichtbau und den z. B. nachträglichen Einbau in Gebäuden geeignet.

Die flinke Temperaturzone bzw. das Flächentemperierelement zeichnet sich insbesondere dadurch aus, dass in das Flächentemperierelement eingeleitete Energie (zum Beispiel über das Rohrleitungssystem) aufgrund der (gegenüber dem Energiespeicher) deutlich reduzierten Masse in kurze Zeitdauer zu einer merklichen Temperaturänderung in dem zu temperierenden Raum führt.

Die träge Temperaturzone bzw. der Energiespeicher zeichnet sich hiergegen dadurch aus, dass die Zufuhr von thermischer Energie überwiegend oder möglichst ausschließlich nur die Temperatur des Energiespeichers verändert/erhöht und die Umgebung des Energiespeichers, zum Beispiel der Raum, keine Temperaturänderung erfährt.

Im Rahmen dieser Erfindung bzw. Anmeldung gleichwertig zu der Bezeichnung "Temperaturzone" sind folgende Begriffe zu verstehen: thermische Schicht, thermisch getrennte Zone, thermisch getrennte Temperaturzone.

Dabei ist erfindungsgemäß vorgesehen, das der im System vorgesehene Energiespeicher überwiegend, bevorzugt ausschließlich (soweit physikalisch erreichbar) nur die Aufgabe einer Speicherung der thermischen Energie übernimmt. Der Energiespeicher ist durch eine Isolierung von dem Flächentemperierelement (und somit auch von dem zu beheizenden Raum) thermisch entkoppelt, wodurch die oben beschriebenen Nachteile in überraschend einfacher Weise ausgeschaltet sind!

Die Erfindung sieht unter anderem ein System zum Temperieren des Raumes eines Gebäudes vor. Als Raum im Sinne der Erfindung ist hierbei zum Beispiel ein Wohnraum, ein Arbeitsraum ein Zimmer, eine Halle, ein Saal oder ähnliches zu verstehen.

Erfindungsgemäß ist vorgesehen, dass der Energiespeicher aus einem festen Material gebildet ist. Hierdurch grenzt sich der erfindungsgemäße Vorschlag von hydraulisch betriebenen Pufferspeichern als Energiespeicher ab, bei welchem in einem voluminösen Tank eine Flüssigkeit, oftmals Wasser gelagert wird, das eine entsprechende Temperatur besitzt. Die thermische Energie, die zum Temperieren genutzt wird, wird in diesen Vorschlägen nach dem Stand der Technik in dem Wasser des Pufferspeichers gespeichert, was es notwendig macht, hierzu ein separates Element (einen Tank) im Gebäude zu verbauen. Der erfindungsgemäße Vorschlag hingegen benutzt die im Gebäude sowieso vorhandenen Elemente bzw. Massen, die eine entsprechende Wärmekapazität aufweisen und erreicht so einen doppelten Nutzen dieses Bauteiles, da diese neben statischen Aufgaben, gestalterischen Aufgaben (diese Elemente umschließen Räume) nun auch eine thermische Aufgabe übernehmen. Dem steht nicht entgegen, dass solche Energiespeicher aus festen Material (monolithische Körper, Hybridkörper, Sandwichbauweisen usw.) von gasförmige oder flüssige Medien durchströmt werden, die dazu vorgesehen sind, Wärmeenergie zu transportieren aber nicht im Sinne des Energiespeichers hier auch zu lagern. Als festes Material ist hierbei insbesondere ein Material zu verstehen, dass sich von den anderen beiden grundsätzlichen Phasen von Stoffen (flüssig und gasförmig) unterscheidet und zum Beispiel eine feste Struktur ausbildet.

Die Erfindung schlägt auch den Einsatz eines Flächentemperierelementes vor. Dieses Flächentemperierelementes hat einerseits zum Beispiel Heizaufgabe, andererseits übernimmt es aber auch Kühlaufgaben. Die gewählte Formulierung bedeutet dabei, je nach Nutzung in dem Raum, ein Kühlen oder ein Beheizen des Raumes.

Dabei ist der Begriff Flächentemperierelement sehr variabel zu verstehen: einerseits ist das Flächentemperierelement tatsächlich als gegenüber der Isolierung bzw. dem Energiespeicher durch eine andere Materialwahl abgegrenzt.

Das Flächentemperierelement nimmt dabei eine Rohrleitung bzw. ein Rohrleitungsregister auf, dass für den An- bzw. Abtransport von thermischer Energie sorgt. Das Flächentemperierelement ist insofern aber auch funktional auslegbar, da es persönlich nur eine Wärmetauscherfläche zum Temperieren des Raumes zu Verfügung zu stellen hat, das über andere Mittel erreicht werden kann. Hierbei ist insbesondere daran zu denken, dass das Flächentemperierelement nur von dem, die Rohrleitung unmittelbar umgebenden Bereichen des Bauteils gebildet ist, wobei dann diese Bereich zum Beispiel Teil eine Isolierung (bestehend aus Isoliermaterial) sein kann. Auch eine solche integrierte Ausgestaltung ist ausdrücklich von dieser Erfindung mitumfasst.

Erfindungsgemäß ist auch vorgesehen, daß der Energiespeicher zumindest teilweise von einer Isolierung umgeben ist. Ziel des erfindungsgemäßen Vorschlages ist, eine Trennung zwischen der Speicherung von thermischen Energie einerseits und dem Temperieren (Heizen bzw. Kühlen) des Raumes andererseits zu erreichen. Daher ist die Isolierung des Energiespeichers so vorzusehen, dass möglichst ein ungewollter Energieverlust des Energiespeichers in Richtung des Raumes unterbleibt. Aufgrund der großen trägen Masse des Energiespeichers, der bevorzugt ja ein Element oder Bauteil des Gebäudes ist, und der damit verbundenen hohen thermischen Energie, die in dem Energiespeicher vorgehalten wird, kommt es ohne die Anordnung der Isolierung zu den eingangs beschriebenen Problemen.

Die Isolierung wird daher geschickterweise insbesondere (insbesondere auch möglichst vollständig) zwischen dem Energiespeicher und dem zu temperierenden Raum angeordnet. In einer bevorzugten Variante befindet sich die Isolierung insbesondere zwischen dem Flächentemperierelement und dem Energiespeicher. Wenn der Energiespeicher zum Beispiel als Deckenelement ausgebildet ist, ist eine vollumfängliche Isolierung, also eine allseitige Isolierung des Energiespeichers/Deckenelementes nicht oder nur mit hohen Aufwand möglich, da ja das Deckenelement auf dem Wandelement aufliegt. In diesem Bereich ist dann oftmals keine Isolierung vorgesehen, was aber ebenfalls von dem erfindungsgemäße Vorschlag umfasst ist. Daher umfasst der erfindungsgemäße Vorschlag zum Beispiel auch eine Ausgestaltung der Isolierung in der Art, dass die Oberseite und/oder Unterseite des Energiespeichers/Deckenelementes von einer Isolierung bedeckt ist.

Neben einer thermischen Abtrennung ist in einer Variante des Vorschlages auch vorgesehen, dass die Isolierung auch eine akustische Isolier- oder Dämpfungsaufgabe übernimmt. Es sind Isoliermaterialen bekannt, die neben einer entsprechenden Isoliereigenschaft auch schallabsorbierende bzw. schalldämpfende Eigenschaften aufweisen. Eine solche Ausgestaltung begünstigt die Ausbildung eines angenehmen Raumklimas.

Im Rahmen dieser Erfindung bzw. Anmeldung gleichwertig zu der Bezeichnung "Isolierung" sind folgende Begriffe zu verstehen: thermische Trennschicht, Dämmlage, Dämmschicht, thermisch getrennte Zone.

Der Erfindung liegt die Erkenntnis zugrunde, dass die Ausbildung thermisch getrennter Temperaturzonen in (bevorzugt) einem einzigen thermisch aktivierten Bauteil aber erfindungsgemäß auch in zwei systematisch gleichartig jedoch thermisch getrennten Bauteilen (z. B. Deckenkern-/ Wandkernaktivierung und Fußboden-, / Decken-,/ Wandheizung bzw. dergleichen mehr) die Möglichkeit der sowohl passiven als auch aktiven thermischen Energiespeicherung, bei gleichzeitig oberflächennaher und flinker Raumtemperierung, bietet. Als erfindungsgemäß vorteilhaft wurde dabei das Zusammenspiel zwischen mindestens einem thermisch träg, speichernd aktiviertem Bauteil und mindestens eines thermisch flink reagierenden Übergabesystems, bevorzugt als Wand-/Decken-/ oder Fußbodenheizung aber auch als freie Heizfläche insbesondere Niedertemperaturheizkörper oder auch Luftübergabesystems ausgebildet, erkannt.

Dies stellt die Grundlage für ein kostengünstiges Energiemanagement im Massivbau (Neubau) und Trockenbau (hier vorwiegend aber nicht ausschließlich in der Sanierung) dar. Ein solches System kann z. B. überschüssige solare Energie während des Tages in dem einem Gebäudeteil (z. B. Südseite oder interne Gewinne) in die Deckenmasse desselben oder/und eines anderen Gebäudeteiles speichern. Die Nutzung der im Kern gespeicherten Energie kann zeitversetzt, passiv durch Wärmeleitung, Abstrahlung und/oder Lüftung oder durch aktive Entladung durch Durchspülen mittels eines flüssigen Mediums (z. B. Wasser) oder dem aktiven Durchströmen von Luft erfolgen.

Erfindungsgemäß wurde gefunden, dass selbiges auch im Kühlfall, z. B. durch Ausnutzung niedriger nächtlicher Außentemperaturen möglich und/oder der Nutzung von Überschussstrom z. B. aus regenerativen Energien wie Solar oder Windkraft via Wärmepumpe oder Kältemaschine möglich ist. Aber auch für herkömmliche thermische Solaranlagen und/oder Absorptionswärmepumpen insbesondere unter Nutzung solarer Wärme, bietet die erfinderisch gefundene Lösung ungeahnte Vorteile.

Erfindungsgemäß kann mit der gefunden Lösung die Aktivierung der Gebäudemasse und die damit einhergehende Entlastung der Anlagentechnik mit den vorteilhaften Systemtemperaturen von Heiz/Kühldecken nicht nur kombiniert werden. Vielmehr tritt durch die Kombination beider Techniken im jeweiligen System, Bauteil bzw. jedem Bauteil aber auch in einem einzigen Bauteil, eine Leistungssteigerung beider Komponenten ein. Höhere Heiz-/Kühlleistungen und noch bessere passive und/oder aktive Regelbarkeit der oberflächennahen flinken Bauteilaktivierung bei gleichzeitig besserer Ausnutzung des Speichervolumens der Bauteilmasse und deren optimierte thermische Be-/ und Entladung. Zudem schafft die in der Erfindung gefundene Lösung die Möglichkeit der nahezu verlustfreien und platzneutralen Speicherung thermischer Energie.

Erfindungsgemäß kann die Trennung der Temperaturzonen sowohl konstruktionsbedingt als auch durch vorhandene bzw. eigens dafür eingesetzte (auch) zusätzliche Baustoffe z. B. Dämmschichten erfolgen.

Erfindungsgemäß wird vorgeschlagen, dass in einem Bauteil zwei, zum Beispiel zueinander möglichst effektiv isolierte Temperaturzonen ausgebildet werden. Hierzu Gleichwertiges, und im Sinne dieser Erfindung Äquivalentes wird auch dadurch erreicht, dass sich die Materialien, aus welchem der Energiespeicher bzw. das Flächentemperierelement bestehen, in ihren jeweiligen Wärmeleit- und/oder Wärmekapazitätseigenschaften ausreichend unterscheiden. So kommt es bei dem Energiespeicher auf eine möglichst hohes Energiespeichervermögen, also eine hohe Wärmekapazität an, wohingegen diese Eigenschaft bei dem Flächentemperierelement eher unerwünscht ist, da das Temperieren eines Raumes, besonders das Heizen eines Raumes oftmals schnell und effektiv, möglichst ohne zu große Verluste durch das Aufheizen des Material des Flächentemperierelementes erfolgen soll.

Die Isolierung wird dann gerade im Bereich der jeweiligen schlechten Wärmeleit- und/oder Wärmekapazitätseigenschaften gebildet. Die Isolierung, bzw. der Isolierungseffekt tritt dann gerade im Grenzbereich zwischen dem Energiespeicher und dem Flächentemperierelement auf, bei welchen die jeweiligen Wärmeleit- und/oder Wärmekapazitätseigenschaften sich entsprechend (bevorzugt sprunghaft) verschlechtern. Es sei an dieser Stelle darauf hingewiesen, dass der Begriff "Isolierung" hier nicht als nur als diskretes separates Bauteil zu verstehen ist, sondern natürlich auch eine funktionelle Bedeutung im Sinne dieser Erfindung und Anmeldung hat. Eine Isolierung hat die Aufgabe einen Verlust an Wärmeenergie zu vermeiden, was insbesondere durch eine schlechte Wärmeleiteigenschaft erreicht wird. Der Abfluss von Verlustwärme kann auch durch eine entsprechend schlechte Wärmekapazität in gleicher Weise erreicht werden. Ausdrücklich umfasst daher die Erfindung auch Ausgestaltungen, bei welchen die Isolierung im Material des Flächentemperierelement integriert ausgebildet ist und so das Flächentemperierelement isolierende Aufgaben aufweist oder aber die Isolierung die Aufgabe eines Flächentemperierelementes miterfüllt.

Dabei kann jede Temperaturzone entweder, sowohl regelungstechnisch als auch hydraulisch eigenständig angesteuert werden oder/und hydraulisch parallel bzw. in Reihe in das Gebäudesystem eingebunden sein.

Während die erste Ausführungsvariante ein breiteres Spektrum von Anwendungsmöglichkeiten bietet ist letztere Variante kostentechnisch günstiger. Insbesondere was den Installations- und Regelaufwand betrifft.

Beispielsweise sind Betondecken bekannt bei denen zur Gewichtsreduktion und/oder Entlastung der Statik z.B. Polystyrol (EPS) oder Hartschaum (PUR/PIR) im Deckenkörper verbaut wird. Auch werden entsprechende Dämmschichten zur Schallabsorption in massiven Baukörpern eingesetzt.

Zudem sind, insbesondere aber nicht ausschließlich, zweischalige Wandsysteme z. B. Filigran-Hohlwände mit und ohne innen liegender Dämmung bekannt. Ebenso sind solche Systeme als zweischalige Beton-Hohlkonstruktionen oder auch Röhrensysteme (z. B. Röhrendecken oder Spannbetondecken) bekannt welche vorwiegend als Decken ihren Einsatz finden.

Solche Systeme werden heute bereits als flinke, thermisch aktive Bauteile eingesetzt. Wobei ausschließlich im unteren Deckenspiegel, oberflächennah Rohrleitungen verbaut werden. Durch die Reduktion des Wärmestroms in die über der/den Dämmschicht(en) bzw. dem Hohlraum (den Hohlräumen) angeordneten und meist statisch nötigen Masse können thermisch relativ flink wirkende Systeme erstellt werden.

Daher kann die Erfindung sowohl in Dächern, Decken als auch Wänden oder Bodenplatten und Estrichen (alleine oder in Verbindung mit Decken, Bodenplatten) usw. genutzt werden. Daher sei ausdrücklich darauf hingewiesen, dass wenn in dieser Schrift von Deckenbauteilen bzw. thermisch aktivierten Bauteilen gesprochen wird, alle betreffenden Bauteile, Bauelemente und Bauumschließungsflächen gemeint sind.

Daher umfasst die Erfindung auch ein den Raum eines Gebäudes begrenzendes Bauteil, wobei das Bauteil einen Energiespeicher zur Speicherung von thermischer Energie und ein Flächentemperierelement, das dem zu temperierenden Raum zugewandt ist, aufweist, wobei zwischen dem Energiespeicher und dem Flächentemperierelement eine Isolierung vorgesehen ist, die überwiegend eine thermische Isolierung zwischen Energiespeicher und Flächentemperierelement bildet und das Bauteil ein System, wie hier beschrieben, bildet.

Hierbei ist zu beachten, dass das hier beschriebene Bauteil Energiespeicher und Flächentemperierelement in einem gemeinsamen Bauteil realisiert. Der Systemgedanke, den die Erfindung ebenfalls umfasst, umschließt nicht nur diese Lösung, sondern umfasst auch eine Lösung, bei welchem der Energiespeicher räumlich, auch bezogen auf das Bauteil, getrennt von dem Flächentemperierelement ausgebildet ist. Zum Beispiel wird als Energiespeicher die üblicherweise gegenüber dem Erdreich isolierte Bodenplatte eines Hauses eingesetzt, die gegenüber eine, diesen bedeckenden Estrichschicht zum Beispiel ebenfalls durch eine Dämmung isoliert ist. Hiermit hydraulisch verbunden ist bei diesem System in geeigneter Weise das Flächentemperierelement, das sich zum Beispiel in Räumen des Erdgeschosses oder ersten Stockes des Gebäudes befinden mag. Die Isolierung zwischen Energiespeicher und Flächentemperierelement wird hierbei durch die räumliche Distanz dieser beiden Elemente und der damit nicht möglichen Wärmeleitung, abgesehen von den diese beiden Elemente verbindenden Rohrleitung, gebildet. Anders gesprochen, ist bei einem solchen Anwendungsbereich eine Aufheizung des Raumes durch Verlustwärme des Energiespeichers nicht von Relevanz.

Daher wird bei dem System in vorteilhafter Weise vorgesehen, dass der Energiespeicher die Fundamentplatte, das Deckenelement oder das Wandelement des Gebäudes ist.

Zwischen dem Energiespeicher und dem Flächentemperierelement ist eine Isolierung vorgesehen, die überwiegend eine thermische Isolierung zwischen Energiespeicher und Flächentemperierelement bildet. Überwiegend sei hier verstanden mit einem Flächenanteil der Isolierung an der Fläche in der Zwischenlage zwischen Energiespeicher und Flächentemperierelement von mindestens 50 %, insbesondere mindestens 60%, 70%. 75%, 80%, 85%, 90%, 95% oder 100%.

Hierzu gleichwertig ist auch eine Wahl des Materials des Flächentemperierelement, das im Vergleich mit dem Material des Energiespeichers schlechtere Wärmeleit- und/oder Wärmekapazitätseigenschaften um mindestens 60%,70%. 75%, 80%, 85%, 90%, oder 95% aufweist.

Bei einer bevorzugten Ausgestaltung des Vorschlags ist vorgesehen, dass die Rohrleitung möglichst mittig im Energiespeicher oder am Energiespeicher, insbesondere an seiner Oberfläche angeordnet ist. Bei der ersten Variante dieses Vorschlages wird durch eine möglichst zentral im Energiespeicher angeordnete Rohrleitung ein effektiver Wärmeübergang der Wärme des Wärmeleitmediums, das in der Rohrleitung zirkuliert, in den Energiespeicher (und zurück) erreicht. Eine solche Ausgestaltung bietet sich zum Beispiel an, wenn das Bauteil bzw. das System neu erstellt/gebaut wird und bei der Planung des Bauteiles oder des Elementes des Systems entsprechend Berücksichtigung finden kann. Ein Vorzug der Erfindung ist es aber auch, dass diese Erfindung auch im bestehenden Gebäuden nachgerüstet werden kann, wobei es dann zuzurechnen ist, dass die Rohrleitung am Energiespeicher, insbesondere an seiner Oberfläche angeordnet wird.

Dies ist der zweite Vorschlag des hier präsentierten Vorschlages. Natürlich ist es auch möglich, im Sanierungsfall die Rohrleitung des Energiespeichers in vorher in den Energiespeicher eingebrachte Gräben einzulegen und diese Gräben hernach mit Wärme gut leitenden Vergussmaterial wieder zu schließen.

Hierbei sei auch erwähnt, dass die Lage der Rohrleitungen im Energiespeicher insbesondere in Abhängigkeit der Ausgestaltung der Isolierung bzw. des Materials des Flächentemperierelementes und/oder des Energiespeichers eingestellt werden kann. Da die über die Rohrleitung in den Energiespeicher eingeleitete Wärmeenergie sich im Material des Energiespeichers durch Wärmefluss verteilt, kann auch durch eine etwas außermittige Anordnung, zum Beispiel durch eine entsprechende Anordnung der Rohrleitung im Energiespeicher auf der dem Flächentemperierelement abgewandten Hälfte des Energiespeichers, das Speichervermögen an Wärme im Energiespeicher, bei gleichzeitiger Reduktion des Aufwandes für die Isolierung und geringen Verlusten aus dem Energiespeicher heraus, optimiert werden.

Des Weiteren ist vorgesehen, dass die Rohrleitung im Flächentemperierelement an der dem zu temperierenden Raum zugewandten Oberfläche angeordnet ist.

Ziel der Ausgestaltung des Flächentemperierelementes ist, dass diese möglichst flink, d.h. mit kurzen Reaktionszeiten in der Lage ist, den Raum zu temperieren, also zu kühlen oder zu heizen. Daher ist es ein Ziel der Ausgestaltung des Flächentemperierelementes, die Wärmeenergie, die in dieses transportiert wird, möglichst effizient und schnell dem zu temperierenden Raum zuzuführen, was durch eine entsprechende Anordnung der Rohrleitung im Flächentemperierelement erreicht wird. Eine weitere Maßnahme liegt darin, das Flächentemperierelement aus Material mit geringer Wärmekapazität oder und/oder isolierenden Eigenschaften auszugestalten, um so mögliche Verlustwege, die dem Ziel einer schnellen und effektiven Energienutzung zuwiderläuft, zu vermeiden.

Es ist klar, dass die beschriebene Rohrleitung Teil eines Rohrleitungsregister ist, die natürlich auch zum Beispiel in mehreren Windungen in dem Flächentemperierelement (analog natürlich auch bei der Ausgestaltung im Energiespeicher) verlegt ist. Natürlich können auch jeweils mehrere, untereinander auch unabhängige Rohrleitungen im Flächentemperierelement/Energiespeicher vorgesehen sein.

Hierbei ist insbesondere vorgesehen, dass der Energiespeicher eine erste Rohrleitung für ein flüssiges Medium und eine zweite Rohrleitung für ein gasförmiges Medium aufweist.

Die Durchmesser der ersten und zweiten Rohrleitung sind dabei nicht zwingend identisch, sondern können einander unterscheiden. So ist der Durchmesser der Rohrleitung für gasförmiges Medium zum Beispiel größer ist wie der Durchmesser der Rohrleitung für das flüssige Medium. Durch die unterschiedlichen eingesetzten Medien kann der Benutzer die zur Verfügung gestellte Wärme des Energiespeichers schnell und in unterschiedlicher Weise nutzen. Die erwärmte Luft kann zum Beispiel als Prozesswärme, zum Beispiel zum Trocknen oder ähnlichem verwendet werden wohingegen mit der hydraulischen Leitung ein Flächentemperierelement, zum Beispiel eine Flächenheizung angesteuert wird.

In einer vorteilhaften Ausgestaltung ist vorgesehen, dass das System zwei Flächentemperierelemente aufweist und der Energiespeicher zwischen den beiden Flächentemperierelementen angeordnet ist. Geschickterweise ist eine Isolierung des Energiespeichers vorgesehen. Somit befindet sich der Energiespeicher (möglichst) thermisch getrennt von den beiden Flächentemperierelement in der nächsten Umgebung die zum Beispiel für die Beheizung von unterschiedlichen Räumen, insbesondere auch in unterschiedlicher Weise angesteuert werden können. Geschickterweise ist dabei ein solches System in einem Bauteil, zum Beispiel einem Hybrid- oder Kompaktbauteil realisiert, das als monolithisches oder aus monolithischen Elementen (zum Beispiel im Sinne eines Sandwichbauteiles) bestehendes Bauteil ausgeführt ist.

Geschickter Weise ist vorgesehen, dass die Isolierung zwischen Flächentemperierelement und Energiespeicher angeordnet ist. Durch diesen Vorschlag entsteht einerseits eine effektive und andererseits auch eine kompaktbauend Variante. Überwiegend sei hier verstanden mit einem Flächenanteil der Isolierung an der Fläche in der Zwischenlage zwischen Energiespeicher und Flächentemperierelement von mindestens 50 %, insbesondere mindestens 60%, 70%, 75%, 80%, 85%, 90%, 95% oder 100%.

**In** einer weiteren bevorzugten Ausführungsform ist vorgesehen, dass die Isolierung gebildet ist von einer Lage von Isoliermaterial und/oder Wärmestrahlung reflektierendem Material bzw. Folienmaterial. Als Isoliermaterial sind die bekannten Materialien wie Polyurethan oder Polystyrol usw. einsetzbar. Es sind aber auch Wärmestrahlen reflektierende Folien oder Materialien bekannt, die einen ähnlichen Effekt haben. Auch diese Materialen sind hier einsetzbar. Natürlich sind auch entsprechende Kombinationen zur Steigerung des Effektes möglich.

Des Weiteren ist günstiger Weise vorgesehen, dass die Isolierung in dem Flächentemperierelementen integriert ausgebildet ist. Es wurde bereits auf diesen Vorzug der Erfindung hingewiesen. Die Erfindung umfasst auch Ausgestaltungen, bei welchen die Isolierung im Material des Flächentemperierelement integriert ausgebildet ist und so das Flächentemperierelement isolierende Aufgaben aufweist oder aber die Isolierung die Aufgabe eines Flächentemperierelementes miterfüllt, also die Isolierung die Aufgabe der Flächentemperierung integriert mit erfüllt.

Dabei ist es insbesondere von Vorteil, dass es im Flächentemperierelement nicht auf gute Wärmekapazitätoder Wärmeleiteigenschaften ankommt, Wärme soll nämlich effektiv an/von dem Raum abgegeben oder aufgenommen werden, weshalb diese beiden Funktionen Isolierung und Flächentemperierelement integriert ausbildbar sind.

Insbesondere ist hierbei vorgesehen, dass die Isolierung gebildet ist von einem Material des Flächentemperierelementes das schlechtere Wärmeleiteigenschaften und/oder Wärmekapazitätseigenschaften als das Material des Energiespeichers aufweist. So ist zum Beispiel vorgesehen, das Flächentemperierelement aus Leichtbeton oder Isolierbeton zu gestalten welches dann gegenüber dem Material des Energiespeichers als Isolierung wirkt und in dieses dann die Rohrleitung, bevorzugt oberflächennah, einzubetten.

Ein weiterer erfindungsgemäßer Aspekt der Erfindung umfasst auch den Vorschlag, dass die zwei Rohrleitungen in Materialen mit jeweils thermisch unterschiedlichen Eigenschaften eingebettet sind. In dieser einfachsten Variante wird durch die erhebliche Verschlechterung der Wärmeleit- bzw. Wärmekapazitätseigenschaften zwischen den beiden Zonen die Isolierung im Sinne der Erfindung realisiert.

Des Weiteren umfasst der Anmeldung auch eine Ausgestaltung bei welchem in einem Mager-, Leicht- oder Isolierbeton mindestens eine Rohrleitung eingebettet ist und so das Flächentemperierelement ausbildet, wobei es bei dieser Varianten auf die Anordnung einer Rohrleitung im darüber liegenden Deckenelement nicht ankommt. Es ist gefunden worden, dass die Funktion des Flächentemperierelement d.h. eine möglichst gleichmäßige Wärmestrahlungsabgabe auch bei Ausgestaltungen des Flächentemperierelement erreicht werden, bei welchen das Material des Flächentemperierelementes eigentlich gut oder sogar sehr gut isolierend sind. Es bildet sich dann unterhalb des Flächentemperierelement eine gleichmäßig erwärmte Luftschicht aus, die eine homogene Abstrahlung der Wärme bewirkt bzw. einen Wärmetransport in der Oberfläche des Flächentemperierelementes bewirkt. Der Anmelder behält es sich vor, genau für diesen Gegenstand im Rahmen einer Teilanmeldung separaten Schutz zu suchen.

Geschickter Weise ist vorgesehen, dass das Bauteil insbesondere als Halbfertigteil, Fertigteil, Betonfertigteil, Spannbetonfertigteil, als Filigranbauteil bzw. Filigrandeckenbauteil, ausgebildet ist. Der erfindungsgemäße Vorschlag ist in einer sehr breiten Weise realisierbar und nicht auf eine spezielle Herstellungsform beschränkt. Der Erfindung ist daher den jeweiligen bauseitigen Gegebenheiten optimal anpassbar und, je nach Grad der Vorfertigung, auch sehr kostengünstig herstellbar. Es ist klar, dass Halbfertig- oder Filigranbauweisen mit Ortbeton komplettiert werden und so das Bauteil, wie beschrieben bilden.

In einer weiteren bevorzugten Ausführungsform ist vorgesehen, dass das Bauteil von einem monolithischen Körper gebildet ist, der sowohl den Energiespeicher als auch das Flächentemperierelement und die Isolierung aufnimmt. Als monolithische Körper im Sinne dieser Erfindung ist hierbei ein Bauteil zu verstehen, das einstückig ausgebildet ist, gegebenenfalls aber auch aus unterschiedlichen Materialien über eine Verbundbauweise realisierbar ist, oder zum Beispiel in einem Herstellungsprozess gegossen wurde. Als monolithische Körper im Sinne dieser Erfindung wird auch ein Körper verstanden, der aus mehreren d.h. mindestens zwei verschiedenen, für sich selber je einstückig hergestellten Bauteile besteht, der hernach mit entsprechenden Verbindungsmitteln wie Schrauben, Anker, Kleber oder ähnliches miteinander verbunden werden. Dem Begriff monolithischen Körper steht auch nicht entgegen, dass ein solcher Körper Isolationsmaterial als Bahnware aufnimmt.

Des Weiteren ist günstiger Weise vorgesehen, dass die Isolierung gebildet ist von im Körper angeordneten Verdrängungskörpern. Der Einsatz der vorgeschlagenen Verdrängungskörpern eröffnet eine überraschend einfache Realisierungsmöglichkeit. Die Verwendung von Verdrängungskörpern ist im Bauwesen eigentlich bekannt, da diese in Betonfertigteile eingebaut werden um den Verbrauch von Beton im Fertigteil zu reduzieren und somit auch die Masse des Fertigteiles abzusenken. Natürlich werden solche Verdrängungskörper nur dann eingesetzt, wenn dies statisch möglich ist. Im vorliegenden Fall allerdings haben diese Verdrängungskörper noch eine weitere Funktion, denn Sie umschließen einen Luftraum, der als Isolierung wirkt und in diesem Bereich natürlich einen Wärmetransport behindert und die Wärmekapazität reduziert. Insbesondere ist es aber mit seinem solchen Verdrängungskörper möglich, das erfindungsgemäße Bauteil aus einem Stück zu gießen d.h. der Bereich des Flächentemperierelement und der Bereich des Energiespeichers sind materialgleich und durch die Schicht von oder Anordnung einzelner Verdrängungskörper ausreichend thermisch entkoppelt.

Erfindungsgemäß wird nun über der/den Dämmschicht(en) bzw. dem Hohlraum (den Hohlräumen) ein z. B. zweites Rohrsystem verbaut. Dadurch lässt sich die hier, in der Regel ohnehin aus statischen Gründen, zur Verfügung stehende Deckenmasse ebenfalls thermisch nutzen.

In einer weiteren, erfindungsgemäßen Ausführung bildet das obere Rohrsystem mit dem unteren Rohrsystem einen einzigen hydraulischen Kreis (Einrohrsystem). Erfindungsgemäß können auch z. B. zwei oder mehrere unterschiedliche Rohrdimensionen verwendet werden. Dadurch lassen sich unterschiedliche Verlegeabstände realisieren bzw. unterschiedlich große Flächen hydraulisch relativ einfach zusammenschließen.

Ein solches "Einrohrsystem" lässt sich kostengünstig umsetzen da ein zweiter thermischer Strang samt Umwälzpumpen, Mischern usw. entfällt. Die unterschiedlichen Temperaturzonen bilden sich dann aus dem rechnerisch zu bestimmenden Delta zwischen Vorlauf und Rücklauf.

Erfindungsgemäß werden die Rohrsysteme bevorzugt mit Flüssigkeiten wie z.B. Wasser durchströmt. Aber auch andere Medien wie Frostschutzmittel, Kältemittel oder Luft bzw. Kombinationen daraus sind denkbar.

Bei regelungstechnisch und/oder hydraulisch eigenständig angesteuerten Rohrsystemen werden die unterschiedlichen Temperaturzonen über z. B. einen doppelten Wasserkreislauf ausgebildet. Erfindungsgemäß als vorteilhaft wurde gefunden, wenn beide Systeme zusätzlich über eine "hydraulische Weiche" verfügen. In dieser erfindungsmäßigen Ausführungsvariante lässt sich das oberflächennahe primär der Raumtemperierung genutzte System gänzlich unabhängig von dem vorwiegend der Energiespeicherung dienendem System steuern und bedienen.

Erfindungsgemäß wurde gefunden, dass die Leistungsfähigkeit des Systems sowohl in Bezug auf die flinke Be-/ und Entladung des Massespeichers als auch bezogen auf die raumseitige Heiz-/Kühlleistung durch ein zusätzliches, luftführendes System im Deckenspiegel deutlich gesteigert werden kann. Dies lässt sich erfindungsgemäß, mittels durch den z. B. Beton (-kern) geführte Röhren in die z. B. herkömmliche Rohrlüfter eingesetzt werden, ausführen. Insbesondere bei Röhrendecken oder Spanndielen bietet sich diese Technik der zusätzlichen Be-/ Entladung mittels Luftstrom an. Die Leistungssteigerung welche Raumseitig erfolgt ist, ist insbesondere im Kühlfall, erheblich und ermöglicht eine deutliche Verkleinerung der Kälteanlagen. Mittels dieser erfindungsgemäßen Lösung lässt sich die Speichermasse nicht nur zeit-/ und bedarfsorientiert nutzen sondern damit einhergehend auch die Heiz-/Kühlleistung förmlich zuschalten OHNE unmittelbar die Anlagentechnik zu belasten.

Eine weitere, im Sinne des multifunktionalen Systems, erfindungsgemäße Lösung besteht in der Entfeuchtung der Raumluft mittels des zuvor beschriebenen Luft-Rohrsystems. Dabei verfügt der Baukörper unterhalb der luftführenden Rohre über eine poröse Oberfläche. Über diese, welche zusätzlich als akustisch wirksamer Absorber dienen kann, wird ein Luftstrom unterhalb des Taupunktes geführt der die darin aus dem Raum aufgenommene Feuchte abtransportiert. Erfindungsgemäß lässt sich dieser Effekt der Entfeuchtung auch erreichen wenn die poröse Oberfläche selbst, z.B. mittels Kühlmedium durchströmter Leitungen, unter den Taupunkt gekühlt und die anfallende Feuchte mittels des dahinter geführten Luftstroms abgetrocknet und abgeführt wird. Dabei kann dieser Luftstrom zur Erhöhung der Feuchteaufnahme, etwas erwärmt sein. Zusätzlich zur oben beschriebenen Be-/Entladung des Deckenkörpers lässt sich in dieser erfindungsgemäß gefundenen Lösung die adiabate Kühlung durch verdunsten leistungssteigernd nutzen.

Eine weitere erfindungsgemäße Lösung wird in dem Aufbringen eines thermisch aktivierten (Nass-/ Trocken-/Verbund-) Estrichs oder eines einfachem aufgelegten Rohrsystems als, je nach Bauform flinke oder träge Komponente, auf z. B. eine Röhrendecke gesehen bei der, der untere Deckenspiegel ebenfalls systembedingt flink bzw. träge ausgebildet wird. Als erfindungsgemäß besonders vorteilhaft wurde gefunden die Deckenunterseite thermisch flink, dagegen die Oberseite thermisch träge auszubilden. Dabei wird als Vorteilhaft gefunden wenn das oben aufgebrachte System, z. B. mittels herkömmlich "schwimmendem Estrich" thermisch vom Deckenkörper getrennt wird.

Zudem wurde erfindungsgemäß gefunden, dass die thermische Trennung der beiden Temperaturzonen bauseits durch vor Ort eingelegte Isolierschichten aus bekannten und dem Markt zur Verfügung stehenden Materialien erfolgen kann.

In der Zeichnung ist die Erfindung insbesondere in einem Ausführungsbeispiel schematisch dargestellt. Es zeigen:

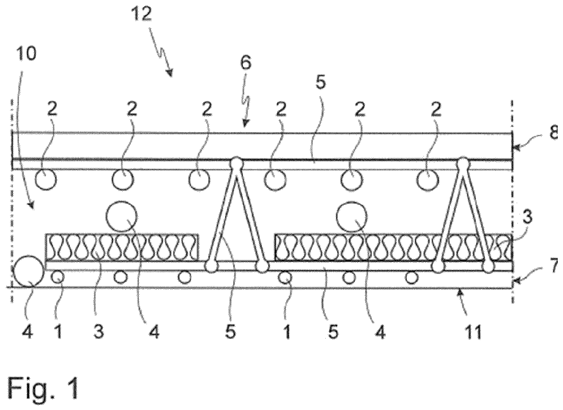

Fig. 1 in einer Ansicht eine Variante des erfindungsgemäßen Bauteils

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen ist sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Figur 1 zeigt ein exemplarisch, erfindungsgemäßes Bauteil mitmindestens zwei Temperaturzonen die teilweise, gänzlich durch eine Dämmschicht aus bekannten Materialien getrennt ist. Folgende Bezugszeichen werden dabei verwendet:
Oberflächennahes Rohrsystem. Hier als "flinkes" System dargestellt
1:Rohrsystem zur Energiespeicherung im "trägen" Teil der Decke.
2:Trennlage
3:Alternativ / optional erfindungsgemäß verwendetes Rohr zur Luftführung
4:Statisch notwendige Bewehrung
5:Betondecke als (Halb-) Fertigteil oder örtlich hergestellt (Ortbeton)
6:Unterer Betonspiegel der Betondecke (6), nimmt/bildet Flächentemperierelement (11)
7:Oberer Betonspiegel der Betondecke (6) nimmt/bildet
10: Energiespeicher
11:Flächentemperierelement
12:System gemäß Erfindung

In dem hier gezeigten Ausführungsbeispiel befinden sich die Rohrleitung (1) des Flächentemperierelement (11) unterhalb der Bewehrung (5), insbesondere nahe der dem Raum zugewandten Oberfläche. Hingegen befinden sich die Rohrleitung (2) des Energiespeichers (10) zwischen den Bewehrungsstäben (5) bzw. unterhalb des obersten, parallel zur Oberfläche des Bauteiles verlaufenden Bewehrungsstabes (5) und somit im Inneren des Bauteiles. Mit dem Bezugszeichen (4) sind insbesondere Rohrleitungen oder Rohrleitungsabschnitte mit größerem Durchmesser gezeigt, die der Luftführung dienen können. Die Trennlage bzw. Isolierung (3) ist, wie deutlich zu sehen ist, zwischen dem Energiespeicher (10) und der im Flächentemperierelement (11) fast durchgehend angeordnet, sie ist im Bereich der Bewehrung (5) ausgespart, um die Montage und den Aufbau des Bauteils zu erleichtern, ohne aber damit der erfindungsgemäßen Effekt merklich zu reduzieren, da doch noch der überwiegende flächenmäßige Bereich zwischen dem Energiespeicher (10) und dem Flächentemperierelement (11) durch die Trennlage bzw. Isolierung (3) voneinander thermisch getrennt sind.

Nachfolgend werden mögliche Merkmale des Vorschlages strukturiert wiedergegeben. Diese sind in sich, aber auch mit mindestens einem der vorganannten Merkmale kombinierbar. Dem Fachmann ist klar, daß sich die Erfindung bereits aus dem Gegenstand mit den wenigsten Merkmalen ergibt.

Die Erfindung umfasst ein Bauteil, welches in allen Differenzierungen von gänzlich örtlich bis hin zum komplett werkseitig vorgefertigtem Vollmontagebauteil, bestehend aus, mit mindestens zwei voneinander, physikalisch und/oder regeltechnisch/thermisch getrennten bzw. trennbaren Zonen hergestellt wird. Dieses zeichnet sich dadurch aus, dass es sich sowohl um ein in sich geschlossenes Bauteil (z. B. Betondecke) als auch um ein, aus einem Konglomerat von mindestens zwei Bauteilen (z. B. schwimmender Estrich mit darunterliegender Betondecke) handelt, in dem/denen Temperaturzonen in welche mindestens ein mit flüssigem Medium und/oder mit mindestens ein gasförmigen Medium durchströmt Rohr geführt werden und welche(s) sowohl/als auch aktiv/passiv, thermisch beladen und/oder entladen werden können.

Ein wie zuvor ausgeführtes Bauteil, wobei mindestens eine thermische Zone eine von der/den anderen thermischen Zonen abweichende verlängerte/verkürzte Reaktionszeit, welche ihre Begründung in einem größeren/kleineren Speichervolumen hat, aufweist.

Ein wie zuvor ausgeführtes Bauteil, wobei es sich um eine Betonkernaktivierung mit thermisch davon getrennter aber im selben Bauteil angeordneter oberflächennaher, flink reagierender z. B. Heiz-/Kühldecke oder Heiz-/Kühlwand oder Heiz-/Kühlboden handelt.

Ein wie zuvor ausgeführtes Bauteil, wobei die thermische Trennschicht aus einem vom Baukörper abweichendem Material und/oder mindestens einem Hohlraum besteht welches(r) zusätzlich akustisch und/oder feuchtabsorbierend genutzt werden kann.

Ein wie zuvor ausgeführtes Bauteil, wobei in mindestens eine thermische Schicht, gegebenenfalls zusätzlich/alternativ ein luftführendes System eingebunden ist welches der Be-/Entladung des Bauteils dient und/oder durch verstärkte Konvektion und/oder Be-/Entladung mindestens einer thermischen Schicht, raumseitig die Leistung (auch flink und bedarfsorientiert) erhöhen und/oder für den Abtransport von in und/oder dem Rohr / der thermischen Trennschicht, welche auch separat mit einem auch eigenem Rohrsystem gekühlt werden kann, anfallender Feuchtigkeit und/oder zusätzlich/ergänzend dem Luftaustausch dienen kann.

Ein wie zuvor ausgeführtes Bauteil, wobei die thermisch getrennten Temperaturzonen hydraulisch mit dem Rohrsystem verbunden und in Reihe geschaltet sind.

Ein wie zuvor ausgeführtes Bauteil, wobei die thermisch getrennten Temperaturzonen hydraulisch getrennt und/oder je nach spezifischer Anforderung über zum Beispiel einen hydraulisch wirkender Pufferspeicher, welcher auch als hydraulische Weiche dienen kann, hydraulisch angesteuert werden und verbunden sind.

Ein wie zuvor ausgeführtes Bauteil, wobei die flinke Temperaturzone (das Flächentemperierelement) gleichzeitig beim Be-/Entladen der trägen Temperaturzone (des Energiespeichers) mit einem dem Nutzen der Einspeicherung entgegengesetzt abweichenden Temperatur bedient und/oder gegebenenfalls mittels technisch bekannten und zusätzlichen Pufferspeicher dergestalt angesteuert wird, dass die durch Transmission auf den flinken Bereich einwirkende Energie aufgenommen und im zusätzlichen Puffer eingespeichert wird. Die hierbei gespeicherte Energie wird zeitversetzt wieder direkt in die flinke Temperaturzone und oder durch Einleiten in die träge Temperaturzone nutzbar gemacht.

Ein wie zuvor ausgeführtes Bauteil, wobei die träge und oder flinke Temperaturzone in beliebig viele kleine Einheiten unterteilt und so einzeln und gegebenenfalls in einer bevorzugten Variante raum- und/oder bedarfsorientiert auch in verschiedenen Temperaturniveaus be- und/oder entladen werden können.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen erwähnt wurden beziehungsweise im Zusammenhang mit anderen Merkmalen besonders günstige Ergebnisse erreichen.

## Patentansprüche

1. Den Raum eines Gebäudes begrenzendes Bauteil, wobei das Bauteil einen Energiespeicher (10) zur Speicherung von thermischer Energie und ein Flächentemperierelement (11), das dem zu temperierenden Raum zugewandt ist, aufweist, wobei zwischen dem Energiespeicher (10) und dem Flächentemperierelement (11) eine Isolierung (3) vorgesehen ist, die überwiegend eine thermische Isolierung zwischen Energiespeicher (10) und Flächentemperierelement (11) bildet und das Bauteil als Filigranbauteil bzw. Filigrandeckenbauteil ausgebildet ist.

2. Bauteil nach Anspruch 1, **dadurch gekennzeichnet, dass** die Rohrleitung (2,4) möglichst mittig im Energiespeicher (10) oder am Energiespeicher (10), insbesondere an seiner Oberfläche angeordnet ist.

3. Bauteil nach einem der vorhergehenden Ansprüche, **dadurch gekennzeichnet, dass** die Rohrleitung (1) im Flächentemperierelement (11) an der dem zu temperierenden Raum zugewandten Oberfläche angeordnet ist.

4. Bauteil nach einem der vorhergehenden Ansprüche, **dadurch gekennzeichnet, dass** der Energiespeicher (10) eine erste Rohrleitung (2) für ein flüssiges Medium und eine zweite Rohrleitung (4) für ein gasförmiges Medium aufweist.

5. Bauteil nach einem der vorhergehenden Ansprüche, **dadurch gekennzeichnet, dass** das System (12) zwei Flächentemperierelemente (11a,11b) aufweist und der Energiespeicher (10) zwischen den beiden Flächentemperierelementen (11a,11b) angeordnet ist.

6. Bauteil nach einem der vorhergehenden Ansprüche, **dadurch gekennzeichnet, dass** die Isolierung (3) zwischen Flächentemperierelement (11) und Energiespeicher (10) angeordnet ist und/oder die Isolierung (3) gebildet ist von einer Lage von Isoliermaterial und/oder Wärmestrahlung reflektierendem Material bzw. Folienmaterial.

7. Bauteil nach einem der vorhergehenden Ansprüche, **dadurch gekennzeichnet, dass** die Isolierung (3) in dem Flächentemperierelementen (11) integriert ausgebildet ist und/ oder die Isolierung (3) gebildet ist von einem Material des Flächentemperierelementes (11), das schlechtere Wärmeleiteigenschaften und/oder Wärmekapazitätseigenschaften als das Material des Energiespeichers (10) aufweist.

8. System für die Temperierung eines Raumes eines Gebäudes und zur Speicherung von thermischer Energie, wobei mindestens ein aus festem Material gebildeter Energiespeicher (10) für die Speicherung der thermischen Energie und mindestens ein Flächentemperierelement (11), das dem zu temperierendem Raum zugewandt ist, für die Temperierung des Raumes vorgesehen ist und das System eine Isolierung (13) aufweist, die den Energiespeicher (10) zumindest teilweise umgibt, wobei der Energiespeicher (10) und das Flächentemperierelement (11) mindestens eine Rohrleitung (1,2,4) für die Leitung eines flüssigen oder gasförmigen Mediums aufweist, das dem Transport von thermischer Energie dient und das System mindestens ein Bauteil nach einem der vorhergehenden Ansprüche aufweist.

9. System nach Anspruch 8, **dadurch gekennzeichnet, dass** der Energiespeicher (10) das Deckenelement oder das Wandelement des Gebäudes ist.
